# EUROPEAN PATENT APPLICATION

(11) **EP 2 853 389 A1**
(43) Date of publication of application: **01.04.2015**
(21) Application number: 14195914.8
(22) Date of filing: 02.12.2014
(51) Int. Cl.: B32B 27/08, B32B 27/32, B32B 27/36

(54) **A lid sheet, a method for manufacture, and a package**

(71) Applicant: Danapak Flexibles A/S, 4200 Slagelse (DK)
(72) Inventor: Johansen, Peter Lass, 5000 Odense C (DK); Christensen, Lars Christian, 4200 Slagelse (DK)
(74) Representative: Trier, Mikkel Roed

(57) **Abstract**

A transparent lid sheet (S) for being punched to a transparent sheet lid (2) to be attached to a container (1), specifically either a PET, a PP or PS container (1) or a container (1) comprising either a PET, PP or PS surface layer, to produce a package, said lid sheet (S) comprising
a transparent base layer (4), which comprises a transparent PET layer (4a) with a transparent barrier coating or barrier layer (4b) coated onto the PET layer, the base layer (4) having a first major surface (4c) substantially coinciding with an outer major surface of the barrier coating (4b), and
a top layer (5) providing a welding layer (5b, 5c) for welding the sheet lid (2) to the container (1), the top layer (5) preferably being provided at or coinciding with the first major surface (4c).

## Description

The present invention relates to a transparent lid sheet for being punched to a transparent sheet lid to be attached to a container, specifically either a PET (polyethyleneterephtalate), a PP (polypropylene) or a PS (polystyrene) container or a container comprising either a PET, a PP or a PS surface layer, to produce a package. The invention also relates to a method for manufacture of such a lid sheet as well as a package comprising such a lid sheet.

Lid sheets of various materials and compositions are known and are used as lids on containers producing packages, e.g. cups and bottles, for the packaging of especially milk products, fruit juices, drinking water, salads, pâtés, etc. The lid may be made of an Al sheet, to which a layer of welding lacquer has been applied in order for it to be able to adhere to the package. This type of lid, however, is not transparent, which is a widespread wish among consumers.

WO 2013/075713 A1 discloses a transparent lid sheet comprising a transparent PET base layer coated with an additional layer on top of the base layer in the form of a polyolefin layer and a PET welding layer of amorphous polyester, which are coextruded onto the base layer, the polyolefin layer being disposed between the base layer and the welding layer.

WO 2011/160627 A1 discloses a transparent lid sheet comprising a transparent PET base layer coated with an additional layer on top of the base layer in the form of a polyolefin layer and a PP welding layer, which are coextruded onto the base layer, the polyolefin layer being disposed between the base layer and the welding layer.

It is also known to apply a layer of non-transparent welding lacquer onto a transparent PET sheet to produce a transparent sheet lid. Since the welding lacquer is milky, to achieve transparency of the sheet lid of the resultant package the welding lacquer is applied only to a welding area at the rim of the lid where the welding to the lid to the container is to take place. The welding lacquer has to be applied precisely, either to the punched lids or in an assembled form to a web of sheet in connection with the closure of the package. The welding lacquer thus leaves a visible rim along the lid edge.

On this background it is the object of the present invention to provide a lid sheet according to the introduction, which has improved barrier properties while retaining the advantageous qualities of the prior art lid sheets, including especially transparency, weldability and peelability.

This object is arrived at by the lid sheet, the method and the package according to the present invention.

Thus, the lid sheet according to the present invention comprises a transparent base layer, which comprises a transparent PET layer with a transparent barrier coating or barrier layer coated onto the PET layer, the base layer having a first major surface, which preferably substantially coincides with an outer major surface of the barrier coating, and a top layer providing a welding layer for welding the sheet lid to the container, the top layer preferably being provided at or coinciding with the first major surface.

Similarly, the method according to the present invention for manufacture of a transparent lid sheet comprises the steps of providing a transparent base layer, which comprises a transparent PET layer with a transparent barrier coating or barrier layer provided directly onto the PET layer, the base layer having a first major surface, which preferably substantially coincides with an outer major surface of the barrier coating, and coating a top layer at the first major surface, to provide a welding layer for welding the sheet lid to the container.

The package according to the present invention comprises a PET, a PP or a PS container or a container comprising a PET, a PP or a PS surface layer, and a sheet lid punched from a lid sheet according to the invention or manufactured according to the method according to the invention, the sheet lid being welded to the container along a welding area, specifically welding seems, at a rim of the container with the welding layer facing and adhering to the container, the sheet lid being separable from the container to open the package by grabbing and pulling at a periphery of the sheet lid causing part or all of the welding layer to remain on the container in the welding area, the welding layer delaminating from the remaining layers of the lid substantially in the welding area only.

It is preferred that the top layer is coated or disposed at or on the first major surface of the base layer, i.e. at or on the surface of the barrier coating (the expressions "at or on" and "at or onto" as used herein generally indicating that a further layer may or may not be present between the two layers). This provides protection of the barrier coating, which may otherwise be scratched, worn or destroyed if it is positioned on the opposite side, i.e. the side exposed outwardly when the sheet lid is positioned on the container. Thus, it is preferred that the barrier coating is covered and protected by the top layer.

The lid sheet manufactured according to the method according to the invention and the lid sheet according to the invention are generally transparent. All layers of the lid sheet are thus transparent except in the case where a welding lacquer is applied to a welding area of the lid sheet in which case the welding lacquer may not be transparent.

It is noted that in the context of the present specification the term "transparent" is intended to mean that when the lid sheet is applied as a lid of a container, it has an optical transparency high enough to allow the contents of the resultant package to be visually inspected. Generally, it is preferred that the transparency is at least 40 %, more preferred at least 60 %, and most preferred at least 70, 80, 90 or 95 %, meaning that a corresponding amount of visible light is transferred through the sheet.

The base layer of the lid sheet according to the invention comprises a transparent PET layer, which preferably essentially consists of PET. The PET layer may comprise small amounts of additional materials such as anti block agents, release agents and the like.

According to the invention it has surprisingly been found that a transparent lid sheet with extremely good barrier properties can be manufactured according to the invention, the lid sheet being weldable onto a container using a welding layer provided at a base layer comprising a barrier coating.

Moreover, the lid sheet surprisingly can be manufactured with sufficient adherence between the base and top layers, while peeling functionality during opening of a package with a lid sheet according to the invention is comparable to that of the prior art.

Furthermore, with the invention a lid sheet with superior barrier properties can be manufactured at surprisingly low cost.

The lid sheet according to the invention is especially suitable for sheet lids of packages used for foods or beverages, which are otherwise susceptible to adapt taste or smell from the packaging material. Examples of such foods or beverages are water, juice, milk or the like.

In addition, the base layer and welding layer show high resistance to fats and oils, and will thus be suitable for use in connection with foods and/or beverages containing fat, e.g. milk, yoghurts, cheese, salads, pâtés or the like.

A further layer in the form of a protection layer coated onto the barrier coating may be provided directly coated onto the first major surface to form part of the base layer, the first major surface being the top major surface of the protection layer. This protection layer may serve to protect the barrier coating, which is specifically relevant in the case of a ceramic barrier coating, and may have a thickness of up to 1.5 µm.

The base layer with barrier coating and potentially a protection layer may be manufactured in a first, separate process before the remaining layers of the lid sheet are produced.

In an embodiment of the lid sheet according to the invention a primer layer is provided between and on said first major surface and said top layer, the primer layer essentially consisting of a primer, which improves adherence of the top layer to said first major surface, the primer layer preferably being distributed with an amount of between 0.2 to 3.0 g/m², more preferred 0.5 to 1.5 g/m².

In a particularly advantageous development of this embodiment the primer layer essentially consisting of a substantially water-insoluble primer, the primer preferably being selected from the group consisting of:
- a PU (polyurethane) based primer, preferably with reactive isocyanate groups,
- a PAO (PU/PvB (polyvinyl buthylene)) based primer,
- a PU/ NC (nitrocellulose) based primer and
- a hotmelt primer based on UV hardening technology.

Other primer types may also be suitable.

During manufacture the primer layer may be applied directly onto said first major surface, the top layer subsequently being coated directly onto the primer layer.

The inventors have discovered that the primer should preferably be solvent based, i.e. non-soluble in water, since the high barrier properties of the ceramic barrier coating may lead to accumulation of water against the barrier coating, which may negatively influence especially the adhesiveness of the primer, potentially leading to the adjacent layers unintentionally being released.

A solvent based primer can comprise or essentially consist of one of the following commercially available products:
- Dow Adcote 76H5M-EA
- Coim NC-3001-A
- Coim CA-916 with hardener
- Siegwerk WG035

The use of a primer may be avoided if a polymer with a sufficiently high adhesion to the base layer is selected for the part of the top layer, which in this case is applied directly onto the base layer. In case the top layer is coextruded onto the base layer, such an adhesive polymer may be provided by coextruding it directly onto the further coextruded layer(s) of the top layer.

The enhanced adhesion between the base layer and the top layer achieved by using a primer layer allows delamination to be controlled during opening of a package with a sheet lid punched from a lid sheet according to the invention.

In an embodiment the barrier coating essentially consists of either PVdC (polyvinylidene chloride) or a ceramic barrier material selected from the group consisting of AlOx (aluminium oxide), SiOx (silicium oxide), magnesium oxide, cerium oxide, hafnium oxide, tantalum oxide, titanium oxide, yttrium oxide, zirconium oxide and mixtures thereof.

Whereas the oxygen transmission rate (ASTM D3985, 23°C, 0% RH) in the above prior art lid sheets comprising a PET base layer has a magnitude in a range of typically 30 to 50 cm³/m²/24h/bar, with a lid sheet according to this embodiment the oxygen transmission rate with similar thickness of the base layer is typically in the range of less than 1 to 10 cm³/m²/24h/bar. A typical desired maximum oxygen transmission rate in lid sheets is 7 to 10 cm³/m²/24h/bar.

Similarly, whereas water vapour transmission rate (ASTM F1249, 38°C, 90% RH) in the above prior art lid sheets has a magnitude in a range of typically 10 to 20 g/m²/24h, with a lid sheet according to the present embodiment the water vapour transmission rate with similar thickness of the base layer is typically in the range of less than 1 to 10 g/m²/24h.

The above mentioned primer materials are specifically suitable for being applied to the barrier materials of the present embodiment, i.e. the materials of the PVdC barrier coating or ceramic barrier coating.

The PVdC barrier coating or ceramic barrier coating may have a thickness of less than 1.5 µm, preferably less than 1.2 µm, more preferred less than 1 µm, and preferably of more than 0.05 µm, more preferred more than 0.5 µm. With a barrier coating thickness of less than 1 µm an oxygen transmission rate of the lid sheet of less than 3 cm³/m²/24h/bar can be achieved. Similarly, a water vapour transmission rate of less than 3 g/m²/24h can be achieved.

In an embodiment the base layer has a thickness of between 23 and 60 µm.

In an embodiment the top layer comprises, preferably consists of, a polyolefin layer and either a) a PET welding layer of PET, preferably APET (amorphous PET) and/or PETG, or b) a PP welding layer coated at, preferably directly on, the base layer, the polyolefin layer being disposed between the base layer and the welding layer. This provides a peelable top layer where the polyolefin layer and the remaining parts of the lid sheet in a welding area can be peeled off from the welding layer when opening a package provided with a sheet lid manufactured from the lid sheet.

During manufacture the top layer is preferably coated at or onto said first major surface by coextruding the polyolefin layer and the PET or PP welding layer at or onto said first major surface.

The top layer is hereby transparent, overall transparency of the lid sheet being maintained so that the welding layer can be provided across the entire surface of the lid sheet, which lowers production costs.

Additionally, the coextruded layer on top of the base layer ensures that the punched lid possesses a suitable rigidity, which prevents the lid from curling, thereby making it possible to punch lids and to apply pre-punched lids to the containers.

A printing process for applying a welding lacquer is avoided in this embodiment.

In addition, in the case where the welding layer is a PET welding layer, the welding layer may have superior organoleptic properties when compared to a PP welding layer since it is less likely to transfer taste to the food or beverage in the package.

Coextrusion of the top layer has the effect that the lid sheet is stronger than a corresponding one provided with welding lacquer, thereby allowing the thickness of the PET layer of the base layer to be reduced correspondingly, which may achieve saving of weight and material of about 15 % compared to a solution using welding lacquer. In this embodiment the base layer preferably has a thickness 23 to 50 um, more preferred 30 to 40 um.

The polyolefin layer may be a PE (polyethylene) layer, preferably in the form of a homopolymer or a copolymer of PE, such as an acrylic PE polymer or an EVA (ethyl vinyl acetate) containing PE or mixtures thereof.

If a PET welding layer is used, this layer is optionally made of PETG (PET glycol-modified), since PETG generally does not crystallize. This results in a welding layer with improved welding properties, e.g. when welding at temperatures below 230°C, compared to normal PET, which may lose its welding properties when it crystallizes.

When the welding layer is disposed against the welding rim surface of the container of PET (in the case where a PET welding layer is used) or PP (in the case where a PP welding layer is used), respectively, safe fusion and thereby tightly fitting assembly of lid and container are achieved.

The coextruded top layer is preferably distributed with an amount of between 10 to 22 g/m², preferably 12 to 17 g/m².

In an embodiment alternative to the latter embodiment (using a top layer including a polyolefin layer and a welding layer that may be coextruded at or onto the base layer) the top layer is a potentially non-transparent lacquer welding layer positioned on or at said first major surface substantially only in a welding area of the lid sheet corresponding to a welding rim of the container.

The lacquer may be a PET lacquer (i.e. not necessarily based on polyester, but suitable for welding to a PET container) or a combi lacquer suitable for welding to a PP or PS container.

During manufacture the top layer may be coated at or onto the barrier coating, the welding lacquer preferably being applied by means of gravure, such as rotogravure, or plain roller, preferably dried at 200° to 240°C, typically 220°C to 230°C.

When using a welding lacquer, to achieve suitable strength of the lid sheet a base layer with a thickness of 40 µm to 60 µm, typically about 50 µm, may be used.

The welding lacquer layer may be distributed with an amount of 4 to 8 g/m², preferably 5 to 7 g/m².

In an embodiment the method according to the invention also comprises the further the step of punching the lid sheet to the final shape of a sheet lid, and subsequently welding the sheet lid to the container, the welding layer facing and adhering to the container in a welding area of the lid along a rim of the container such as to produce a closed package.

In a development of the latter method the closed package is opened by grabbing and pulling at a periphery of the sheet lid to separate the sheet lid from the package so that the welding layer substantially remains on the container in the welding area, the welding layer delaminating from the remaining layers of the sheet lid substantially in the welding area only.

Thus, a pull in a corner, flap or tap of the lid may cause the welding layer to remain on the container in the welding area as the welding layer and the remaining parts of the lid sheet delaminate substantially in the welding area only. This ensures that when the lid is pulled off the container, a precise peeling or delamination of the welding layer will take place, thereby ensuring that the sheet lid is pulled off without the lid being torn or destroyed.

Embodiments of the invention will be described in the following detailed description with reference to the drawings in which
- Fig. 1: shows a perspective view of an embodiment of a package according to the invention manufactured according to the method according to the invention comprising a container and a sheet lid manufactured from a lid sheet according to an embodiment of the invention, the package being shown prior to welding,
- Fig. 2: shows a detail of the package of Fig. 1 in a sectional view taken along the line II - II in fig. 1 after the sheet lid has been torn off of the container, i.e. after delamination,
- Fig. 3: shows a schematic sectional view of the lid sheet of Fig. 1 before delamination,
- Fig. 4: shows a schematic sectional view corresponding to that of Fig. 3 of an alternative embodiment of the lid sheet according to the invention before delamination, and
- Fig. 5: shows a schematic sectional view corresponding to that of Fig. 3 of an alternative embodiment of the lid sheet according to the invention before delamination.

In this specification, generally when terms such as "thickness" (unit µm) and "distribution" (unit g/m²) are used, unless otherwise indicated it is to be understood that the layer in question has a substantially or essentially uniform thickness across the planar extent of the layer or sheet according to the provided value.

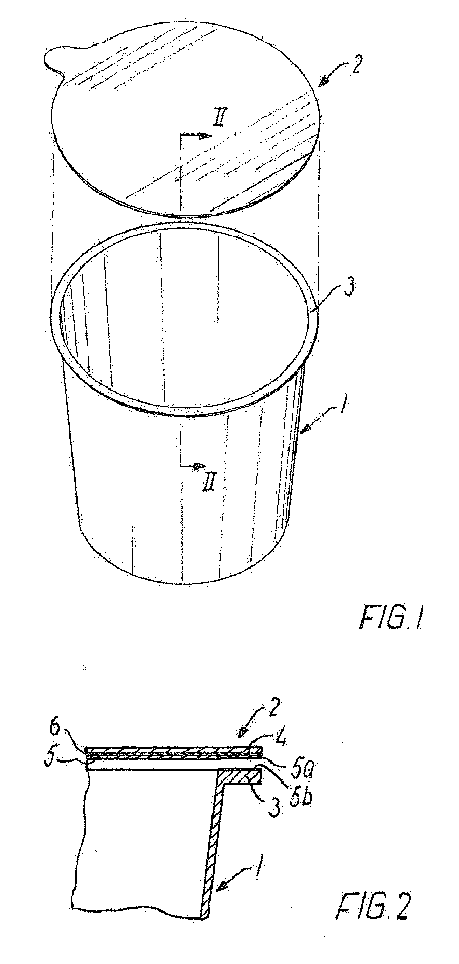

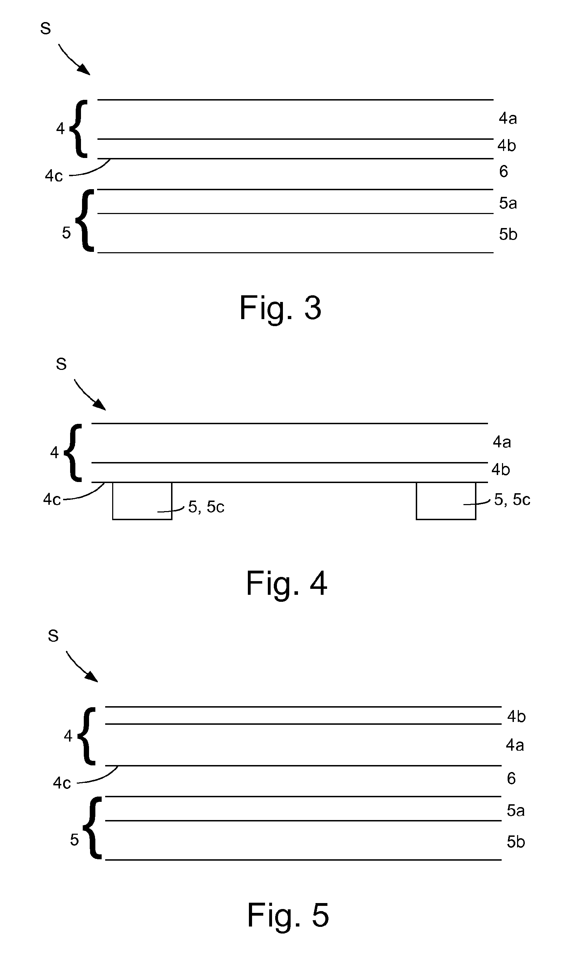

The package shown in Figs 1 and 2 comprises a container 1, which is manufactured of PET, such as APET (amorphous polyester) or CPET (crystalline polyester), or PP. The package comprises a sheet lid 2 punched from the lid sheet S shown in Fig. 3, the lid 2 in Figs 1 and 2 being shown in a position prior to welding.

Especially in the case where the container 1 is made of PET the package is specifically suitable for packaging of water, fruit juices, salads or like products. Especially in the case where the container 1 is made of PP the package is specifically suitable for packaging of yoghurt or like milk products. In both cases the container 1 may also be a tray or the like for salad foods or a bottle for milk or soft drinks.

The container 1 is provided with an upper welding rim 3, which is plane on an upper side, which faces the sheet lid 2, to enable welding of the sheet lid 2 onto the rim 3 to produce the closed package.

When the container 1 has been filled with its contents, it is closed with the sheet lid 2. The lid 2 has been punched in advance and is thus adapted in shape and size to the opening of the container 1 before welding.

The lid sheet S and thus the punched lid 2 comprises a transparent base layer 4 with a transparent PET top layer 4a, which has a thickness of between 23 and 50 µm, preferably a thickness of 30-40 µm. This thickness is adapted to the need for strength, barrier properties, size, etc. The PET layer 4a is essentially constituted of PET. The base layer 4 also comprises a barrier coating 4b coated onto the PET layer 4a, see Fig. 3.

On this base layer 4 a top layer comprising a polyolefin layer, specifically a PE layer, which is designated 5a, and either a PET welding layer or a welding layer comprising a PP polymer, which is designated 5b, is provided by coextrusion of the two layers 5a and 5b directly onto a first major surface 4c of the PET base layer 4. The welding layer 5b is intended to be welded together with the rim portion 3 of the container 1.

The polyolefin layer 5a is a homopolymer or a copolymer of PE - a suitable PE copolymer is an acrylic copolymer of PE or an ethyl vinyl acetate (EVA) containing PE - and will be denoted the PE layer in the following. Use of any of these copolymers ensures that delamination between the welding layer 5b and the PE layer 5a only occurs in the welding area.

In the case where the welding layer 5b is a PET welding layer, the welding layer may be or comprise a homopolymer or a copolymer of PET. It may comprise other polymers, additives etc., but preferably mainly comprises PET. A highly suitable material for the welding layer is PETG, a pure polyester which does not crystallize, i.e. it remains amorphous. This results in a welding layer with improved welding properties in contrast to normal polyester, which loses its welding properties when it crystallizes at temperatures well below 220 to 230 °C, which is the maximum temperature level for sealing, due to the softening point of the base layer 4.

In the case where the welding layer 5b is a PP welding layer, the welding layer may be or comprise a homopolymer or a copolymer of PP. It may comprise other polymers, additives etc., but preferably mainly comprises PP. A suitable copolymer of the PP welding layer may contain PE.

The two layers 5a and 5b are preferably distributed in an accumulated amount of about 12 to 22 g/m², preferably 15 to 17 g/m². The PE layer 5a preferably has a thickness of 5 to 15 g/m², corresponding to about 5.5 to 17 µm. In the case were a PET welding layer is used, the welding layer 5b preferably has a thickness of 2 to 10 g/m², corresponding to about 2.8 to 7.5 µm. In the case where a PP welding layer 5b is used, the PP welding layer 5b is preferably distributed in an amount of about 4 to 6 g/m² corresponding to about 4.3 to 6.5 µm.

The base layer 4 has applied thereto a primer layer 6, which ensures enhanced adhesion between the first major surface 4c of the base layer 4 and the PE layer 5a.

An alternative method of manufacture of a lid sheet according to the invention comprises extrusion of the base layer 4 and, by coextrusion, the creation of the layer 5 by a first layer 5a and a welding layer 5b, said layers 4, 5 being put together to form the lid sheet S.

It is preferred that the lid sheet S is calendered immediately after the application of the coextruded layer to the base layer.

The resultant lid sheet S is transparent and weldable in its full planar extent. Thereby, any lid shape and dimension may be punched from a roll of lid sheet, as the resultant lid 2 may be adapted to the size and shape of the container 1. The lid 2 is supplied from a roll of the lid sheet S and is punched into its final shape prior to being applied to the containers 1.

In connection with the filling of containers, e.g. cups, in a filling machine, the lid 2, preferably pre-punched into its final shape, is applied subsequently and welded to the rim portion 3.

When the container 1 has thus been filled and closed with the sheet lid 2, the user will be able to pull off the lid 2 by pulling in a periphery of the sheet lid 2, specifically in a lid flap or lid tap visible in Fig. 1.

Hereby, the PE layer 5a and the welding layer 5b will be separated or delaminated from each other in such a manner that the pulling-off or opening of the package along the rim portion 3 is controlled and precise. The welding layer 5b will essentially remain on the container 1 in the welding area, i.e. on the rim portion 3 thereof, and remain on the lid 2 in the non-welded area.

Since the two layers 5a and 5b are relatively stiff, the dimensions of the base layer 4 may be reduced, thus saving weight as well as consumption of material. Moreover, as a result of the enhanced rigidity of the lid sheet, the punched lid 2 does not curl after the punching.

Optionally, an additional print or colour layer may be applied in a generally known manner on for example a top surface or a bottom surface of the sheet lid 2 either before or after the punching of the lid 2, and/or an additional barrier coating may optionally be applied to the lid sheet before or after the coating and/or punching.

Fig. 4 is a view similar to that of Fig. 3 showing an alternative embodiment of the lid sheet S according to the invention. This lid sheet S is generally similar to the embodiment of the lid sheet S shown in Figs 1 to 3 except for the differences mentioned in the following.

Thus, in the embodiment of Fig. 4 the top layer 5 is a non-transparent lacquer welding layer 5c coated onto the major surface 4c substantially only in a welding area of the lid sheet S corresponding to the welding rim 3 of the container 1. On the remaining parts of the major surface 4c no lacquer or any other layer is present, i.e. the surface of the sheet lid 2 facing the contents of the container 1 is the major surface 4c of the base layer 4.

A fully covering transparent lacquer (not shown) may optionally be applied on the first major surface 4c before the welding lacquer layer 5c is applied.

The lid sheet S shown in Fig. 4 may be applied to a similar container 1 as shown in Figs 1 and 2. If the container 1 is a PET container, a PET welding lacquer is applied. If the container 1 is a PP or PS container a combi welding lacquer is applied.

During manufacture the top layer 5 is coated onto the barrier coating 4b by means of rotogravure and dried at 220°C to 230°C. The top layer 5 is distributed with an amount of 6 g/m².

Fig. 5 shows an embodiment of the lid sheet according to the invention, which is similar to that of Fig. 3 with the only difference being that the barrier coating 4b is positioned on the opposite side of the lid sheet S so that the barrier coating 4b faces away from the lid sheet S. As is shown, the top layer 5 is coated on the surface 4c of the PET layer 4a of the base layer 4 via a primer layer 6. The primer layer 6 can be composed of a primer similar to the primer applied in the embodiment of Fig. 3.

Generally, in the lid sheets S and the sheet lids 2 described above the layers are preferably provided extending substantially along the entire area of the adjacent layer so that the area sizes of major surfaces of all layers are similar to each other. However, specifically in the embodiment where the top layer 5 is a lacquer welding layer 5c the top layer 5 substantially only extends in or at a welding area.

### Example 1: Lid sheets according to the prior art

A lid sheet was prepared according to WO 2013/075713 A1 with a PET base layer with a thickness of 36 µm coated with an additional layer or top layer with a thickness of 16 g/m² on top of the base layer in the form of a polyolefin layer and a PET welding layer of amorphous polyester, coextruded onto the base layer, the polyolefin layer being disposed between the base layer and the welding layer.

A further lid sheet was prepared according to WO 2011/160627 A1 with a PET base layer with a thickness of 36 µm coated with an additional layer or top layer with a thickness of 16 g/m² on top of the base layer in the form of a polyolefin layer and a PP welding layer, coextruded onto the base layer, the polyolefin layer being disposed between the base layer and the welding layer.

In both cases the oxygen transmission rate (ASTM D3985, 23°C, 0% RH) was measured to approximately 45 cm³/m²/24h/bar. The water vapour transmission rate (ASTM F1249, 38°C, 90% RH) was approximately 15 g/m²/24h.

A further lid sheet was prepared by coating a non-transparent 6 g/m² top layer welding lacquer onto a 50 µm transparent PET sheet only at a welding area at a rim of the lid.

In this case the oxygen transmission rate (ASTM D3985, 23°C, 0% RH) was measured to approximately 35 cm³/m²/24h/bar. The water vapour transmission rate (ASTM F1249, 38°C, 90% RH) was approximately 12 g/m²/24h.

The difference in the transmission rates is believed to mainly be due to the different thicknesses of the base layers.

### Example 2: Lid sheets according to the invention applying a coextruded top laxer

A transparent lid sheet was prepared according to the embodiment described above with reference to Figs 1 to 3 using a base layer with a thickness of 36 µm coated with a top layer with a thickness of 16 g/m² on top of the base layer in the form of a polyolefin layer and a PET welding layer, coextruded onto the base layer, the polyolefin layer being disposed between the base layer and the welding layer. The base layer comprised a transparent PET layer with a transparent < 1 µm AlOx barrier coating and a 1 µm protective layer applied directly onto the PET layer. A 1 µm water-insoluble primer was applied between the top and base layers.

A further transparent lid sheet was prepared according to the embodiment described above with reference to Figs 1 to 3 using a base layer with a thickness of 36 µm coated with a top layer with a thickness of 16 g/m² on top of the base layer in the form of a polyolefin layer and a PP welding layer, coextruded onto the base layer, the polyolefin layer being disposed between the base layer and the welding layer. The base layer comprised a transparent PET layer with a transparent < 1 µm AlOx barrier coating and a 1 µm protective layer applied directly onto the PET layer. A 1 µm water-insoluble primer was applied between the top and base layers.

In both cases the oxygen transmission rate (ASTM D3985, 23°C, 0% RH) was measured to approximately 1-3 cm³/m²/24h/bar. The water vapour transmission rate (ASTM F1249, 38°C, 90% RH) was approximately 1-3 g/m²/24h.

A further transparent lid sheet was prepared according to the embodiment described above with reference to Figs 1 to 3 using a base layer with a thickness of 36 µm coated with a top layer with a thickness of 16 g/m² on top of the base layer in the form of a polyolefin layer and a PP welding layer, coextruded onto the base layer, the polyolefin layer being disposed between the base layer and the welding layer. The base layer comprised a transparent PET layer with a transparent 1 µm PVdC barrier coating and a 1 µm protective layer applied directly onto the PET layer. A 1 µm water-insoluble primer was applied between the top and base layers.

In this latter case the oxygen transmission rate (ASTM D3985, 23°C, 0% RH) was measured to approximately about 8 cm³/m²/24h/bar. The water vapour transmission rate (ASTM F1249, 38°C, 90% RH) was approximately 8 g/m²/24h.

### Example 3: Lid sheets according to the invention applying a welding lacquer top layer

A transparent lid sheet was prepared according to the embodiment described above with reference to Fig. 4 using a base layer with a thickness of 50 µm coated with a top layer with a thickness of 6 g/m² on top of the base layer in the form of a PET lacquer welding layer. The base layer comprised a transparent PET layer with a transparent < 1 µm AlOx barrier coating and a < 1 µm protective layer applied directly onto the PET layer.

A further transparent lid sheet was prepared according to the embodiment described above with reference to Fig. 4 using a base layer with a thickness of 50 µm coated with a top layer with a thickness of 6 g/m² on top of the base layer in the form of a combi lacquer welding layer. The base layer comprised a transparent PET layer with a transparent < 1 µm AlOx barrier coating and a 1 µm protective layer applied directly onto the PET layer.

In both cases the oxygen transmission rate (ASTM D3985, 23°C, 0% RH) was measured to approximately 1-3 cm³/m²/24h/bar. The water vapour transmission rate (ASTM F1249, 38°C, 90% RH) was approximately 1-3 g/m²/24h.

A further transparent lid sheet was prepared according to the embodiment described above with reference to Fig. 4 using a base layer with a thickness of 50 µm coated with a top layer with a thickness of 6 g/m² on top of the base layer in the form of a combi lacquer welding layer. The base layer comprised a transparent PET layer with a transparent < 1 µm PVdC barrier coating and a 1 µm protective layer applied directly onto the PET layer.

In this latter case the oxygen transmission rate (ASTM D3985, 23°C, 0% RH) was measured to approximately 8 cm³/m²/24h/bar. The water vapour transmission rate (ASTM F1249, 38°C, 90% RH) was approximately 8 g/m²/24h.

It appears from the examples that when using a barrier coating the thickness of the PET layer of the base layer is not decisive for the barrier properties.

## Claims

1. A transparent lid sheet (S) for being punched to a transparent sheet lid (2) to be attached to a container (1), specifically either a PET, a PP or a PS container (1) or a container (1) comprising either a PET, PP or PS surface layer, to produce a package, said lid sheet (S) comprising a transparent base layer (4), which comprises a transparent PET layer (4a) with a transparent barrier coating or barrier layer (4b) coated onto the PET layer (4a), the base layer (4) having a first major surface (4c), which preferably substantially coincides with an outer major surface of the barrier coating (4b), and
a top layer (5) providing a welding layer (5b, 5c) for welding the sheet lid (2) to the container (1), the top layer (5) being provided at or coinciding with the first major surface (4c).

2. A lid sheet (S) according to claim 1, wherein a primer layer (6) is provided between said first major surface (4c) and said top layer (5), the primer layer (6) essentially consisting of a primer, which improves adherence of the top layer (5) to said first major surface (4c), the primer layer (6) preferably being distributed with an amount of between 0.5 to 1.5 g/m².

3. A lid sheet according to claim 2, wherein the primer layer (6) essentially consists of a substantially water-insoluble primer, the primer preferably being selected from the group consisting of:
- a PU based primer, preferably with reactive isocyanate groups,
- a PAO (PU/PvB) based primer,
- a PU/ NC based primer and
- a hotmelt primer based on UV hardening technology.

4. A lid sheet according to any one of the previous claims, wherein the barrier coating (4b) essentially consists of either PVdC or a ceramic barrier material selected from the group consisting of AlOx, SiOx, magnesium oxide, cerium oxide, hafnium oxide, tantalum oxide, titanium oxide, yttrium oxide, zirconium oxide and mixtures thereof.

5. A lid sheet (S) according to any one of the previous claims, wherein the barrier coating (4b) has a thickness of less than 1.5 µm, preferably less than 1.2 µm, more preferred less than 1 µm, and/or preferably of more than 0.05 µm, more preferred more than 0.5 µm

6. A lid sheet (S) according to any one of the previous claims, wherein the top layer (5) comprises, preferably essentially consists of, a polyolefin layer (5a) and either a) a PET welding layer (5b) of PET, preferably APET (amorphous PET) and/or PETG, or b) a PP welding layer (5b) coated at, preferably directly on, the base layer (4), the polyolefin layer (5a) being disposed between the base layer (4) and the welding layer (5b), the polyolefin layer (5a) preferably being a PE layer, preferably in the form of a homopolymer or a copolymer of PE, such as an acrylic PE polymer or an EVA containing PE or mixtures thereof.

7. A lid sheet (S) according to any one of claims 1 to 5, wherein the top layer (5) is or comprises a lacquer welding layer (5c) of a welding lacquer positioned at or on said first major surface (4c) substantially only in a welding area of the lid sheet (S) corresponding to a welding rim (3) of the container (1).

8. A method for manufacture of a transparent lid sheet (S) for being punched to a sheet lid (2) to be attached to a container (1), specifically either a PET, a PP or a PS container (1) or a container (1) comprising either a PET, PP or PS surface layer, to produce a package, comprising the steps of
providing a transparent base layer (4), which comprises a transparent PET layer (4a) with a transparent barrier coating or barrier layer (4b) provided directly onto the PET layer, the base layer (4) having a first major surface (4c), which preferably substantially coincides with an outer major surface of the barrier coating (4b), and
coating a top layer (5) at or onto the first major surface (4c) to provide a welding layer (5b, 5c) for welding the sheet lid (2) to the container (1).

9. A method according to claim 8, further comprising the step of applying a primer layer (6) onto said first major surface (4c), the primer layer (8) essentially consisting of a primer, which improves adherence of the top layer (5) to said first major surface (4c), the top layer (5) subsequently being coated onto the primer layer (6).

10. A method according to claim 8 or 9, wherein the top layer (5) is coated at said first major surface (4c) by coextruding a polyolefin layer (5a) and either a) a PET welding layer (5b), preferably of APET and/or PETG, or b) a PP welding layer (5b) at or onto said first major surface (4c), the polyolefin layer (5a) being disposed between said first major surface (4c) and the welding layer (5b).

11. A method according to claim 8 or 9, wherein the top layer (5) is coated onto the barrier coating (4b) by applying a welding layer of a welding lacquer at or onto said first major surface (4c) to form a lacquer welding layer (5c) disposed substantially only in a welding area of the lid sheet (S) corresponding to a welding rim (3) of the container (1).

12. A method according to any one of claims 8 to 10, wherein the resultant lid sheet (S) is according to any one of claims 1 to 6.

13. A method according to claim 11, wherein the resultant lid sheet (S) is according to claim 7.

14. A method according to any one of claims 8 to 13, further comprising the steps of
punching the lid sheet (S) to the final shape of a sheet lid (2), and subsequently
welding the sheet lid (2) to the container (1), the welding layer (5b, 5c) facing and adhering to the container (1) in a welding area of the sheet lid (2) along a rim (3) of the container (1) such as to produce a closed package (1), the method preferably further comprising the step of opening the closed package by grabbing and pulling at a periphery of the sheet lid (2) to separate the sheet lid (2) from the package so that the welding layer (5b) substantially remains on the container (1) in the welding area, the welding layer (5b) delaminating from the remaining layers of the sheet lid (2) substantially in the welding area only.

15. A package, comprising
a PET, a PP or a PS container (1) or a container (1) comprising a PET, a PP or a PS surface layer, and
a sheet lid (2) punched from a lid sheet (S) according to any one of claims 1 to 7 or manufactured according to any one of claims 8 to 14, the sheet lid being welded to the container (1) along a welding area, specifically welding seems, at a rim (3) of the container (1) with the welding layer (5b) facing and adhering to the container (1), the sheet lid (2) being separable from the container (1) to open the package by grabbing and pulling at a periphery of the sheet lid (2) causing the welding layer (5b) to remain on the container (1) in the welding area, the welding layer (5b) delaminating from the remaining layers of the lid (2) substantially in the welding area only.
